# EUROPÄISCHE PATENTSCHRIFT

(11) **EP 0 732 586 B1**
(45) Veröffentlichungstag und Bekanntmachung des Hinweises auf die Patenterteilung: **12.07.2000**
(21) Anmeldenummer: 96103722.3
(22) Anmeldetag: 09.03.1996
(51) Int. Cl.: G01N 29/10, G01N 29/28

(54) **Prüfkopf zum Ultraschallprüfen einer eingebauten Innenmehrkantschraube**
Probe for ultrasonic testing of polygonal socket screws in situ
Sonde de contrôle ultrasonore pour vis à manchon polygonal incorporé

(30) Priorität: 15.03.1995 DE 19509290
(43) Veröffentlichungstag der Anmeldung: 18.09.1996
(73) Patentinhaber: ABB Reaktor GmbH, D-68167 Mannheim (DE)
(72) Erfinder: Bonitz, Frank, 66539 Neunkirchen (DE)
(74) Vertreter: Rupprecht, Klaus, Dipl.-Ing.

(56) Entgegenhaltungen:
- EP-A- 0 441 145
- DE-A- 4 005 545
- FR-A- 2 538 470
- US-A- 3 921 442
- US-A- 4 640 131
- US-A- 5 156 050
- US-A- 5 220 839

## Beschreibung

Die Erfindung betrifft ein Verfahren zum Ultraschallprüfen einer eingebauten Mehrkantschraube, deren Innenmehrkant an eine Grundfläche grenzt, mit einem Prüfkopf, dessen die Sollkontur der Grundfläche aufweisendes Anpaßstück auf seiner der Grundfläche abgewandten Seite wenigstens einen Ultraschallwandler trägt, wobei die Grundfläche von dem Anpaßstück kontaktet wird.

Ein derartiger Prüfkopf ist aus der US 5,156,050 A bekannt. Die Kontur der Grundfläche des Innensechskantes weist Fertigungstoleranzen auf. Der aus einem soliden Werkstoff bestehende Koppelkörper kann diese Fertigungstoleranzen nicht ausgleichen, so daß ein flächendeckender Kontakt zwischen dem Koppelkörper und der-Grundfläche nicht gegeben ist. Unpräzise Meßergebnisse sind die Folge. Ferner ist durch die Zentrierung zwischen dem Gehäuse des Prüfkopfes und der Mantelfläche des Innensechskantes die Führung des Prüfkopfes bereits vorgegeben. Unvermeidbare Fertigungstoleranzen führen auch hier zu mangelhafter Anlage des Koppelkörpers an die beispielsweise kegelförmig ausgebildete Grundfläche, wenn die Zentrierung zwischen Mantelfläche und Gehäuse eine Zentrierung zwischen Koppelkörper und Grundfläche nicht mehr erlauben.

Aus der US 3,921,442 A ist ein Kupplungselement für eine Ultraschallprüfeinrichtung bekannt, dessen Werkstoff eine Affinität zu Wasser besitzt und sich daher akustisch etwa wie Wasser verhält. Der verwendete Werkstoff kann auch elastisch sein.

Nach der EP 0 635 719 A2 weist ein bekannter stiefelartiger Ultraschallwandler, der entlang einer Schweißnaht oder an einer anderen rauhen Prüflingsoberfläche bewegt wird, eine Flüssigkeitsfüllung auf, die von einer flexiblen Membrane eingeschlosen ist.

Ferner ist aus der DE 35 04 522 A1 eine Ultraschallprüfeinrichtung für eine Schlitzschraube bekannt. Dabei wird auf jedem durch einen Schlitz begrenzten Stirnflächenbereich der Schraube ein Ultraschallprüfkopf aufgesetzt.

Schließlich ist aus der DE 40 05 545 C2 eine Prüfanordnung für von der Stirnseite zugängliche Kopfschrauben bekannt. Die Ausbildung des Ultraschallprüfkopfes wird dort nicht erwähnt. Insbesondere die Fig. 2 der DE 40 05 545 C2 läßt erkennen, daß wegen des Abstandes zwischen der Schraubenstirnfläche und den Ultraschallwandlern offenbar nach der Tauchtechnik geprüft wird. Die Einschallung mit für die Tauchtechnikanwendung ausgelegten Senkrechtprüfköpfen, welche den Ultraschall über eine Wasservorlaufstrecke einbringen, ist empfindlich gegenüber Ungenauigkeiten in der Positionierung des Prüfkopfes und dessen Ausrichtung. Diese Ungenauigkeiten führen bei Tauchtechnikprüfung zur Deformation des Schallfeldes und damit zu Einschränkungen der Sensoranordnung für die Prüfaufgabe. Insbesondere ist eine Tauchtechnikprüfung empfindlich gegenüber den Toleranzen in der Ausgestaltung der Grundfläche des Innenmehrkantes, wenn sie als Bohrkegeloberfläche ausgeführt ist.

Es stellt sich die Aufgabe, ein Verfahren und einen Prüfkopf zum Ultraschallprüfen einer Innenmehrkantschraube anzugeben, das bzw. der unter Überwindung der Ungenauigkeiten eine über die Grundfläche des Innenmehrkants zugängliche Prüfung ermöglicht.

Gelöst wird diese Aufgabe erfindungsgemäß dadurch, daß zwischen der Mantelfläche des Innenmehrkants und der Peripherie des Anpaßstückes ein Freiraum eingehalten wird.
Der Freiraum stellt sicher, daß eine Zentrierung des Prüfkopfes allein zwischen dem Anpaßstück und der Grundfläche der Schraube erfolgt und somit präzise Meßergebnisse erzielt werden.

Vorzugsweise wird bzw. werden bei Verwendung von mehreren Schallwandlern alle Schallwandler gemeinsam, eine Gruppe von Schallwandlern oder ein einzelner Schallwandler betrieben.

Damit kann im Prüfgegenstand eine variable Schallfeldstruktur erzielt werden. Hierbei lassen sich Teilbereiche in der Schraube mit erhöhter Empfindlichkeit prüfen. Durch entsprechendes Durchtakten von einzelnen Schallwandlern oder zu Gruppen zusammengeschalteten Schallwandler ist neben der räumlichen Lage der Empfindlichkeitszone die Empfindlichkeit des Prüfkopfes steuerbar. Durch den Betrieb verschiedener einzelner Schallwandler oder Gruppen von Schallwandlern für den Sendefall und den Empfangsfall läßt sich erreichen, daß die Ultraschallwellen bezüglich der Axialachse der Schraube mit einem Winkel eingestrahlt werden. Bei Betrieb der Gesamtanordnung kann dagegen durch Überlagerung aller abgesandten Schallwellen der einzelnen Schallwandler ein Schallfeld mit Abstrahlung in Axialrichtung erzielt werden. Beim Betrieb der einzelnen Schallwandler in ihrer Gesamtheit oder beim Betrieb einzelner Baugruppen läßt sich durch geeignete Leitverzögerungen der Sendeanregung bzw. Laufzeitverzögerung der empfangenen Signale der Einzelelemente die Richtwirkung und Fokuseigenschaft der Sende- und Empfangsanordnung gezielt steuern.

Ein Prüfkopf zur Lösung der Aufgabe setzt ein Anpaßstück ein, dessen der Grundfläche zugewandte Seite bereichsweise schallabsorbierend ausgebildet ist. Damit wird eine Dämpfung unerwünschter Schallausbreitungen erreicht, die sonst zu einer Verfälschung des Prüfergebnisses führen können.

Anhand eines Ausführungsbeispieles und der schematischen Fig. 1 bis 6 wird der erfindungsgemäße Prüfkopf beschrieben.

Dabei zeigen
- Fig. 1: eine in einen Bauteil eingesetzte Innenmehrkantschraube mit einem Ultraschallprüfkopf,
- Fig. 2: eine Innenmehrkantschraube gemäß Fig. 1 mit einem Ultraschallprüfkopf während eines Beschallungsvorganges,
- Fig. 3: eine Innenmehrkantschraube gemäß Fig. 1 mit einem Ultraschallprüfkopf während eines anderen Beschallungsvorganges,
- Fig. 4: eine Ansicht in Pfeilrichtung III der Fig. 2 oder 3 auf die Schraube und ein Prüfkopf in einem größeren Maßstab,
- Fig. 5: ein Prüfkopf gemäß Fig. 4 mit einem einstückigen Ring gemäß Fig. 1 und
- Fig. 6: ein Prüfkopf gemäß Fig. 4 mit mehreren Ringstrukturen.

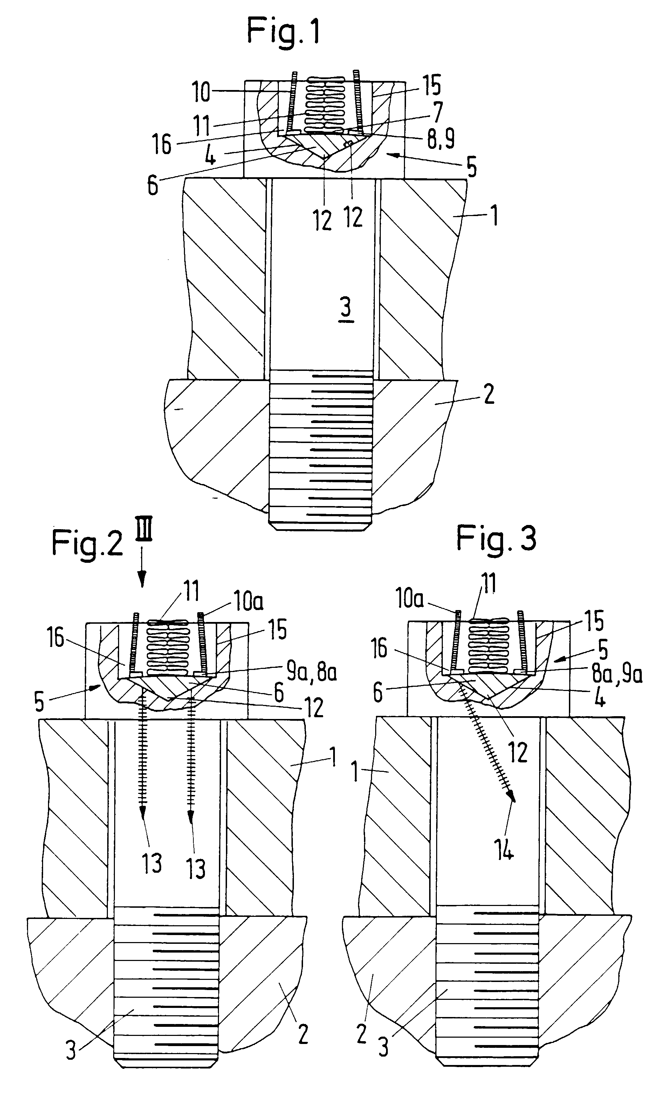

Die Fig. 1 bis 3 zeigen einen Querschnitt durch zwei Bauteile 1, 2, die über eine Innenmehrkantschraube 3 miteinander verbunden sind. Eine Grundfläche 4, an die das Innenmehrkant 15 grenzt, ist kegelförmig ausgebildet und stelllt einen sogenannten Bohrkegel dar. Zur Prüfung der Schraube 3, insbesondere des Schraubenschaftes und des Übergangsbereiches Schraubenschaft/Schraubenkopf von der Grundfläche 4 aus, wird ein Ultraschallprüfkopf 5 in die in den Fig. 1 bis 3 gezeigte Position gebracht.

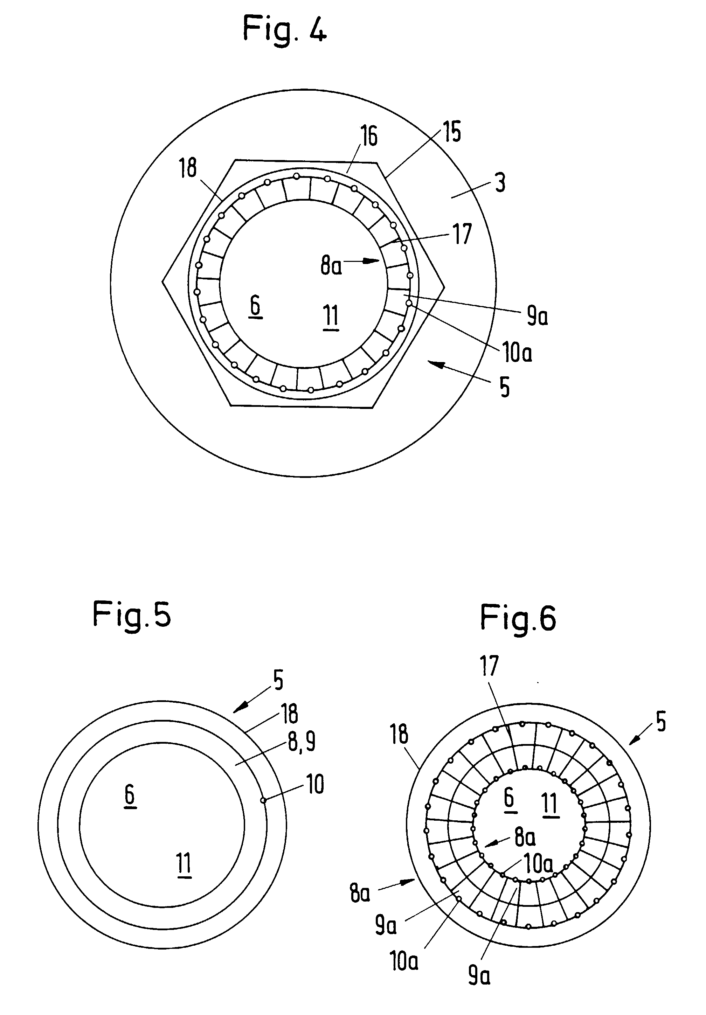

Der Ultraschallprüfkopf 5, dessen Aufsicht in einem größeren Maßstab aus den Fig. 4, 5 und 6 hervorgeht, weist ein Anpaßstück 6 auf, das aus einem elastischen Werkstoff, mit im Arbeitsfrequenzbereich des Ultraschalls geringer Dämpfung, besteht. An seiner dem Schraubenkopf zugewandten Seite entspricht die Form des Anpaßstückes 6 der Sollkontur der Grundfläche 4. Die der Grundfläche 4 abgewandte Basisfläche 7 des Anpaßstückes ist beim Ausführungsbeispiel leicht kegelig ansteigend ausgebildet. Sie kann aber auch in horizontaler Richtung betrachtet eben ausgerichtet sein.

Auf der dem als Bohrkegel ausgebildeten Grundfläche abgewandten Basisfläche 7 des Anpaßstückes 6 ist ein im Zusammenhang mit der Fig. 5 erkennbarer einstückiger Ring 8 angeordnet, der einen einstückigen Schallwandler 9 bildet. Der Ring 8 ist mit dem Anpaßstück 6 derart verbunden, daß er eventuelle Anpaßbewegungen an die Istkontur der Grundfläche 4 mit ausführen kann. Eine mehr oder weniger stark kegelig ausgebildete Basisfläche 7 des Anpaßstückes 6 beeinflußt die Einschallrichtung. Zwischen der Mantelfläche des Innenmehrkants 15 und der Peripherie 18 des Anpaßstückes 6 besteht ein Freiraum 16. Der dadurch bestehende Abstand zwischen Anpaßstück 6 und der Mantelfläche des Innenmehrkants 15 stellt sicher, daß der zum vollständigen Kontakt des Anpaßstückes 6 mit dem kegeligen Bereich der Grundfläche 4 erforderliche Zentriervorgang nicht behindert wird. Zwischen dem als Halter des Anpaßtückes 6 dienenden Faltenbalg 11 und der Mantelfläche des Innenmehrkants 15 besteht ebenfalls ein Abstand, so daß die alleinige Zentrierung des Ultraschallprüfkopfes 5 störungsfrei über das flexibel ausgebildete Anpaßstück 6 erfolgen kann. Zu- und Ableitungen 10 führen vom Ultraschallwandler 9 zu nicht dargestellten Steuer- und Auswerteinrichtungen. Im Zentrum der Basisfläche 7 ist ein Faltenbalg 11 angelenkt, der zu einer nicht weiter dargestellten Einrichtung zum Bewegen des Prüfkopfes 5 relativ zum Schraubenkopf gehört. Der Außendurchmesser des Ringes 8 ist kleiner höchstens gleich der Peripherie 18 des Anpaßstückes 6.

Das Anpaßstück 6 ist vorzugsweise im Bereich seiner Spitze und/oder an dem an die Basisfläche 7 grenzenden Kegelbereich mit Einsätzen 12 aus schallabsorbierenden Werkstoff versehen. Damit kann eine Dämpfung von unerwünschten Schallwellen erreicht werden, die sonst zu einer Verfälschung des Prüfergebnisses führen könnten.

Die Fig. 2 und 3 zeigen im Zusammenhang mit Fig. 4 eine auf der Basisfläche 7 angeordnete Ringstruktur 8a, die segmentartig aus mehreren Ultraschallwandlern 9a zusammengesetzt ist. Zwischen den Ultraschallwandlern ist eine Dämpfungsschicht 17 angeordnet. Die einzelnen Ultraschallwandler 9a sind unter Einbeziehung der Dämpfungsschichten 17 zu einer starren Ringstruktur 8a verbunden, die die erforderliche Bewegungen beim Zentrier- und Anpaßvorgang zwischen der Grundfläche 4 und dem Anpaßstück 6 in ihrer Gesamtheit mit ausführt. Jedem Schallwandler 9a ist eine Zu- und Ableitung 10a zu nicht dargestellten Steuer- und Auswerteeinrichtungen zugeordnet. Mit dieser Anordnung läßt sich die durch die Basisfläche vorgegebene Schallfeld struktur verändern. Die Art der jeweiligen Variablen ist davon abhängigig, ob beispielsweise alle Schallwandler 9a gleichzeitig oder ein Gruppe von Schallwandlern in Betrieb sind. Nach der schematischen Darstellung der Fig. 2 sind alle Schallwandler 9a gleichzeitig in Betrieb, so daß ein durch die Pfeile 13 symbolisiertes Schallfeld mit einer Abstrahlung in Axialrichtung der Innenmehrkantschraube 3 erzielt wird. Soll ein schräg zur Schraubenachse verlaufendes Schallfeld (Pfeilrichtung 14 gemäß Fig. 3) erzeugt werden, das eine Variante zu der durch die Basisfläche 7 vorgegebene Schallrichtung darstellt, so werden die Schallwandler 9a einer Schallwandlergruppe nacheinander angeregt. Mit der Anordnung läßt sich also beim Einsatz geeigneter Steuermittel die Richtwirkung und Fokuseigenschaft der ausgesandten und empfangenden Signale gezielt steuern. Auch in der Fig. 4 ist der Freiraum 16 zwischen der Peripherie des Anpaßstückes und der Mantelfläche des Innenmehrkants 15 zu erkennen.

Nach der in der Fig. 6 gezeigten Ausbildung sind zwei konzentrisch zueinander angeordnete Ringstrukturen 8a dargestellt, die hinsichtlich der Schallwandler 9a in gleicher Weise ausgebildet sein können, wie zu Fig. 2 bis 5 beschrieben. Diese zur Erzielung eines feinstrukturierten Prüfergebnisses vorgesehenen Ausbildung kann auch nicht konzentrisch zueinander angeordnete Ringstrukturen aufweisen.

## Patentansprüche

1. Verfahren zum Ultraschallprüfen einer eingebauten Innenmehrkantschraube (3), deren Innenmehrkant (15) an eine Grundfläche (4) grenzt, mit einem Ultraschallprüfkopf (5), dessen die Sollkontur der Grundfläche (4) aufweisendes Anpaßstück (6) auf seiner der Grundfläche (4) abgewandten Seite wenigstens einen Ultraschallwandler (9) trägt, wobei die Grundfläche (4) von dem Anpaßstück (6) kontaktet wird, dadurch gekennzeichnet, daß zwischen der Mantelfläche des Innenmehrkants (15) und der Peripherie (18) des Anpaßstückes (6) ein Freiraum (16) eingehalten wird.

2. Verfahren nach Anspruch 1, dadurch gekennzeichnet, daß bei Verwendung von mehreren Ultraschallwandlern (9), ein Ultraschalwandler allein oder eine Gruppe von Ultraschallwandlern betrieben wird bzw. alle Ultraschallwandler gemeinsam betrieben werden.

3. Prüfkopf zum Ultraschallprüfen einer eingebauten Innenmehrkantschraube (3), deren Innenmehrkant (15) an eine Grundfläche (4) grenzt, wobei ein Ultraschallprüfkopf (5), dessen die Sollkontur der Grundfläche (4) aufweisendes Anpaßstück (6) auf seiner der Grundfläche (4) abgewandten Seite wenigstens einen Ultraschallwandler (9) trägt und wobei die Grundfläche (4) von dem Anpaßstück (6) kontaktet wird, dadurch gekennzeichnet, daß die der Grundfläche (4) zugewandte Seite des Anpaßstückes (6) bereichsweise schallabsorbierend ausgebildet ist.

## Claims

1. A method for ultrasonic testing of an installed polygonal socket screw (3) whose polygonal socket (15) is adjacent to a base area (4), with an ultrasonic probe (5) whose adapter (6) provided with the scheduled shape of the base area (4) carries at least one ultrasonic transducer (9) on its side averted from the base area (4), with the base area (4) being put into contact with the adapter (6), characterized in that a free space (16) is maintained between the jacket surface of the polygonal socket (15) and the periphery (18) of the adapter (6).

2. A method as claimed in claim 1, characterized in that when several ultrasonic transducers (9) are used one ultrasonic transducer will be operated alone or a group thereof is operated or all ultrasonic transducers are operated jointly.

3. A probe for the ultrasonic testing of an installed polygonal socket screw (3) whose polygonal socket (15) is adjacent to a base area (4), with an ultrasonic probe (5) whose adapter (6) provided with the scheduled shape of the base area (4) carries at least one ultrasonic transducer (9) on its side averted from the base area (4) and with the base area (4) being put into contact with the adapter (6), characterized in that the side of the adapter (6) facing the base area (4) is arranged in a sound absorbent manner in certain regions.

## Revendications

1. Procédé pour le contrôle ultrasonore d'une vis (3) à empreinte polygonale en creux, en position de montage, dont l'empreinte polygonale en creux (15) se termine au niveau d'une surface de fond (4), à l'aide d'une sonde ultrasonore (5) dont l'adaptateur (6) présentant le contour de consigne de la surface de fond (4) porte, sur son côté éloigné de la surface de fond (4), au moins un transducteur ultrasonore (9), l'adaptateur (6) étant en contact avec la surface de fond (4), **caractérisé** par le fait qu'un espace libre (16) est entretenu entre la surface d'enveloppe de l'empreinte polygonale en creux (15) et la périphérie (18) de l'adaptateur (6).

2. Procédé suivant la revendication 1, **caractérisé** par le fait que lors de l'utilisation de plusieurs transducteurs ultrasonores (9), on fait fonctionner un transducteur ultrasonore seul ou un groupe de transducteurs ultrasonores ou en commun tous les transducteurs ultrasonores.

3. Sonde pour le contrôle par ultrasons d'une vis (3) à empreinte polygonale en creux, en position de montage, vis dont l'empreinte polygonale en creux (15) se termine au niveau d'une surface de fond (4), une sonde de contrôle ultrasonore (5) dont l'adaptateur (6) présentant le contour de consigne de la surface de fond (4) porte au moins un transducteur ultrasonore (9) sur son côté éloigné de la surface de fond (4), l'adaptateur (6) étant en contact avec la surface de fond (4), **caractérisé** par le fait que le côté de l'adaptateur (6) tourné vers la surface de fond (4) est réalisé au moins par zones avec effet d'absorption sonore.
